# FASCICULE DE BREVET EUROPEEN

(11) **EP 1 672 874 B1**
(45) Date de publication et mention de la délivrance du brevet: **28.03.2012**
(21) Numéro de dépôt: 05292683.9
(22) Date de dépôt: 14.12.2005
(51) Int. Cl.: H04L 29/06

(54) **Procédé de transmission securisée, système, pare-feu et routeur le mettant en oeuvre**
Verfahren zur sicheren Übertragung und System, Firewall und Router zur Durchführung des Verfahrens
Secure transmission method and system, firewall and router implementing the method

(30) Priorité: 15.12.2004 FR 0413354
(43) Date de publication de la demande: 21.06.2006
(73) Titulaire: SAGEM Défense Sécurité, 75015 Paris (FR)
(72) Inventeur: Colas, Gilles, 91400 Orsay (FR)
(74) Mandataire: Loisel, Bertrand

(56) Documents cités:
- WO-A-03/025766
- WO-A-03/049400
- US-A1- 2003 126 468

## Description

La présente invention se rapporte au domaine des réseaux sécurisés et plus particulièrement aux barrières de sécurité informatique, ou pare-feu, ou encore en anglais 'firewall', qui permettent de filtrer des flux de données provenant d'un réseau extérieur avant leur transmission dans un réseau sécurisé.

Le terme 'pare-feu' peut classiquement désigner soit un équipement dédié à la fonctionnalité de pare-feu, soit un système logique intégré dans un équipement ayant d'autres fonctionnalités que celle de pare-feu, comme par exemple un logiciel intégré dans un ordinateur. Le pare-feu est destiné à sécuriser un réseau par filtrage des données provenant d'un réseau extérieur, avant de les transmettre dans le réseau sécurisé.

Le pare-feu décide de transmettre ou non des données en fonction de critères de sécurité déterminés.

Il a classiquement une première interface adaptée pour communiquer avec des équipements du réseau extérieur et une seconde interface adaptée pour communiquer avec des équipements du réseau sécurisé. Plus précisément, la première interface reçoit et analyse des flux de données en provenance du réseau extérieur. Puis, sur la base de cette analyse, en fonction des critères de sécurité, le pare-feu détermine si une donnée reçue depuis le réseau extérieur est autorisée à être transmise dans le réseau sécurisé.

A cet effet, plusieurs types de filtrage peuvent être mis en oeuvre par un pare-feu. Quelque soit la manière dont le pare-feu exerce son rôle de filtre, le pare-feu a en charge d'assurer une certaine isolation entre le monde extérieur et le réseau sécurisé.

Dans le cas où une donnée répond aux critères de sécurité, la seconde interface la transmet dans le réseau sécurisé.

Nombreux sont les réseaux de transmission comprenant un pare-feu de sorte à protéger l'accès à une partie du réseau.

Le document WO 03/025766 décrit ainsi une transmission de paquets de données depuis un réseau externe vers un réseau sécurisé. Cette transmission peut être réalisée sur une pluralité de voix de transmission vers le réseau sécurisé. Afin de sélectionner une de ces voix de transmission pour un paquet de données, on se base sur des informations d'état relatives à ce paquet.

Le document 03/049400 décrit également une transmission de paquets de données depuis un réseau extérieur vers un réseau sécurisé. Au cours de cette transmission, les paquets de données sont examinés de sorte à déterminer s'ils contiennent une information qui correspond à un certain protocole. Dans le cas où les paquets contiennent cette information, ils sont aiguillées vers une passerelle d'application 111, cette dernière appliquant un traitement spécifique à ces paquets.

Le document US 2003/126468 décrit aussi une transmission de paquets de données depuis un réseau extérieur vers un réseau sécurisé. Au cours de cette transmission, un dispositif d'interface est en charge de déterminer si, d'après sa configuration, les paquets de données font partie d'une transaction d'un type autorisé. Si tel n'est pas le cas, les paquets sont alors aiguillés vers un serveur de sécurité. Ce dernier contrôle si, d'après sa configuration, les paquets aiguillés font partie d'une transaction d'un type autorisé. Si tel est le cas, la configuration du dispositif d'interface est alors modifiée pour accepter des transactions de ce type.

Lorsque le réseau extérieur est un réseau IP ("Internet Protocol"), les données à transmettre dans le réseau sécurisé sont des paquets IP. Les sections suivantes se réfèrent à un tel réseau extérieur à titre illustratif, sans toutefois limiter le domaine de l'invention.

Pour des raisons de sécurité bien connues de l'homme du métier, le pare-feu n'est généralement pas autorisé à modifier un paquet IP à transmettre dans le réseau sécurisé.

De ce fait, une des difficultés dans ce domaine est la transmission d'une information supplémentaire au paquet IP, sans altérer le niveau de sécurité offert par le pare-feu aux équipements du réseau sécurisé.

Or, dans certains cas, il peut être très avantageux, et même parfois fondamental d'ajouter au paquet à transmettre une information disponible sur le pare-feu et qui peut être utile dans le réseau sécurisé.

Dans une architecture de réseau classique, le pare-feu transmet un paquet accepté dans le réseau sécurisé par l'intermédiaire d'un équipement du réseau sécurisé ayant en charge le routage des paquets acceptés dans le réseau sécurisé. Ce type d'équipement est désigné sous le terme 'routeur'. Dans une telle architecture, une information supplémentaire, disponible sur le pare-feu, peut par exemple aider le routeur à router efficacement et correctement le paquet IP dans le réseau sécurisé. Afin de fournir au routeur une telle information supplémentaire, plusieurs cas peuvent être aisément envisagés.

Dans un premier cas, le routeur peut obtenir l'information disponible sur le pare-feu à partir de données reçues dans le paquet. Mais, dans le cas où l'obtention de cette information requiert des calculs complexes et lourds à mettre en oeuvre, les performances du routeur peuvent alors être réduites.

Dans un autre cas, l'information disponible sur le pare-feu est transmise au routeur directement dans le paquet. Mais, une telle manipulation, modifiant de manière intrusive le paquet IP, peut être dangereuse pour le réseau sécurisé et altérer le niveau de protection offert par le pare-feu.

Dans un cas encore différent, on peut ajouter une couche protocolaire pour transmettre cette information supplémentaire depuis le pare-feu au routeur. Mais, une nouvelle couche protocolaire implique de lourdes et complexes modifications sur les différents équipements en charge du transport de cette information supplémentaire.

L'invention vise à remédier à ces inconvénients.

A cet effet, un premier aspect de l'invention propose un procédé de transmission de paquets de données depuis un réseau extérieur vers un réseau sécurisé.

Le réseau sécurisé et le réseau extérieur sont interconnectés via un pare-feu comprenant une première interface avec le réseau extérieur et une seconde interface avec le réseau sécurisé.

En outre, le pare-feu foumit, sur la seconde interface, une pluralité d'interfaces virtuelles.

Une association entre des informations spécifiques du pare-feu et les interfaces virtuelles est mémorisée d'une part dans le pare-feu et d'autre part dans le réseau sécurisé.

Le procédé comprend les étapes suivantes :
/a/ déterminer si on accepte de transmettre un paquet reçu depuis le réseau extérieur dans le réseau sécurisé sur la base de critères de sécurité prédéfinis ;
/b/ dans le cas où le paquet reçu est accepté, sélectionner une information spécifique à transmettre au réseau sécurisé avec le paquet accepté ;
/c/ déterminer une interface virtuelle parmi ladite pluralité d'interfaces virtuelles, en fonction de l'information spécifique sélectionnée sur la base de ladite association ;
/d/ transmettre le paquet accepté via ladite interface virtuelle déterminée ;
/e/ sur réception du paquet dans le réseau sécurisé, déduire ladite information spécifique à partir de l'interface virtuelle par laquelle le paquet est reçu, sur la base de ladite association.

Dans un mode de réalisation de la présente invention, le réseau sécurisé comprend un routeur et une pluralité d'équipements de réseau.

Dans une telle architecture, la seconde interface du pare-feu est reliée au routeur.

Ainsi, le routeur peut router le paquet accepté en fonction notamment de l'information spécifique déduite à l'étape /e/.

Le réseau sécurisé peut fournir différents types de service, chacun étant associé à un ou plusieurs équipements du réseau sécurisé. Chaque information spécifique peut alors correspondre à un desdits différents types de service.

On peut associer une adresse physique virtuelle à chaque interface virtuelle. Le pare-feu émule alors plusieurs interface virtuelles physiques.

Dans ce cas, à l'étape /d/, on transmet le paquet de données accepté via une couche protocolaire indiquant l'adresse physique virtuelle associée à l'interface virtuelle déterminée à l'étape /c/.

Un deuxième aspect de la présente invention propose un système de transmission de paquets de données depuis un réseau extérieur vers un réseau sécurisé. Un tel système comprend un pare-feu et un routeur comprenant chacun des moyens pour mettre en oeuvre le procédé selon le premier aspect de la présente invention.

Un troisième aspect de la présente invention propose un pare-feu destiné à opérer dans le système selon le deuxième aspect de la présente invention.

Un quatrième aspect de la présente invention propose un routeur destiné à opérer dans le système selon le deuxième aspect de la présente invention.

Un cinquième aspect de la présente invention propose un produit programme d'ordinateur, destiné à être stocké dans une mémoire d'un pare-feu et/ou d'un routeur, ou sur un support mémoire amovible, et comprenant des instructions pour la mise en oeuvre de tout ou partie des étapes du procédé selon le premier aspect de la présente invention.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une architecture de réseau comprenant un pare-feu s'interfaçant à un réseau extérieur et à un réseau sécurisé selon un mode de réalisation de la présente invention ;
- la figure 2 illustre les principales étapes du procédé de transmission selon un mode de réalisation de la présente invention ;
- la figure 3 illustre une architecture détaillée d'un pare- feu selon un mode de réalisation de la présente invention ;
- la figure 4 illustre un routeur selon un mode de réalisation de la présente invention ;
- la figure 5 illustre en détail la transmission d'un paquet selon un mode de réalisation de la présente invention.

Le réseau extérieur considéré dans les sections suivantes est un réseau IP, cet exemple ne limitant pas l'invention.

Un des objectifs de la présente invention est de transmettre un paquet provenant d'un réseau extérieur en lui associant une information supplémentaire disponible sur le pare-feu, tout en garantissant un niveau très élevé de sécurité contre des attaques du réseau sécurisé susceptibles de provenir du réseau extérieur.

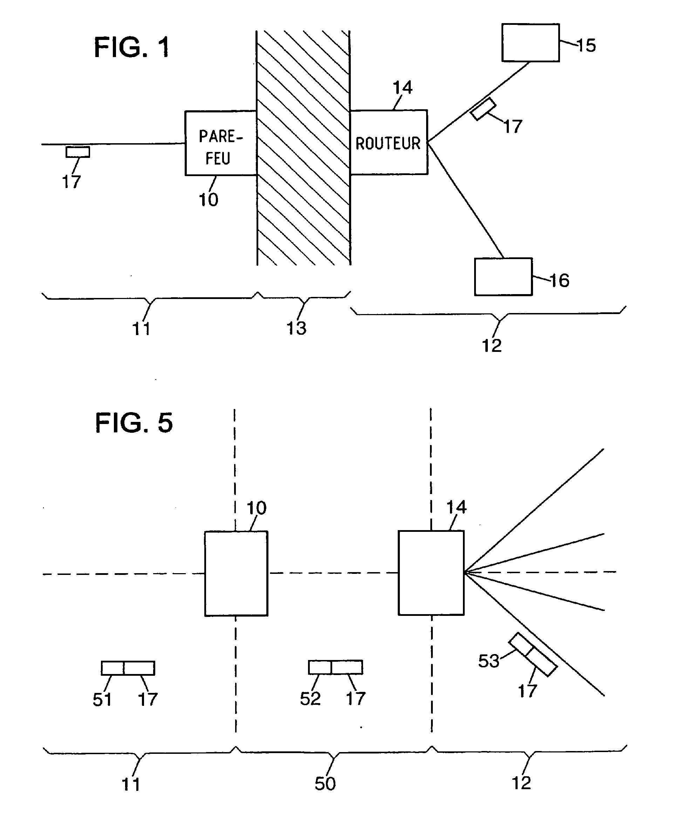

La figure 1 décrit un tel pare-feu 10 entre un réseau extérieur 11 et un réseau sécurisé 12.

Le pare-feu 10 peut être considéré comme une sorte de fusible pour la protection du réseau sécurisé. Il a en charge d'accepter la transmission dans le réseau sécurisé, des paquets reçus du réseau extérieur, lorsque ces paquets répondent à des critères de sécurité prédéfinis. Puis, il transmet les paquets acceptés dans le réseau sécurisé. Dans l'architecture illustrée en figure 1, le réseau sécurisé comprend un routeur 14. Ce dernier reçoit les paquets acceptés par le pare-feu.

Entre le pare-feu 10 et le routeur 14, une zone 13 est classiquement référencée par les termes "zone démilitarisée". De préférence, entre le pare-feu 10 et le routeur 14, dans cette zone démilitarisée, un protocole de type Ethernet est utilisé.

La sécurité assurée par le pare-feu repose sur l'indépendance de fonctionnement du pare-feu 10 et celui du routeur 14.

On note que l'invention couvre tout type de protocole pour le réseau extérieur et le réseau sécurisé.

Ainsi, dans une telle architecture, un paquet 17 émis dans le réseau extérieur à destination du réseau sécurisé, et répondant à des critères définis de sécurité est transmis dans le réseau sécurisé.

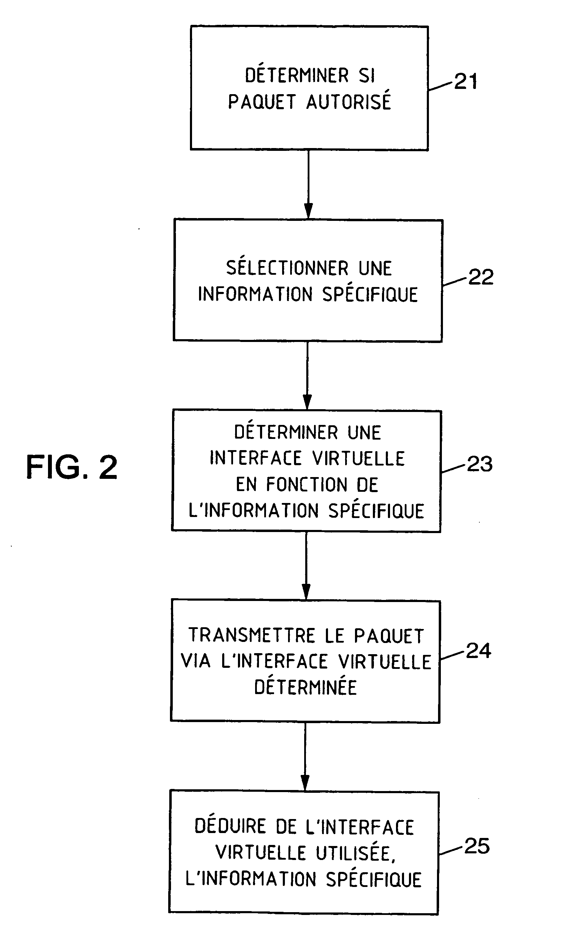

La figure 2 illustre les principales étapes d'une transmission via un pare-feu selon un mode de réalisation de la présente invention.

Dans le pare-feu, plusieurs informations spécifiques sont disponibles. Chacune de ces informations peut correspondre à des paramètres définis respectifs, de telle sorte que, le pare-feu peut associer une des informations spécifiques à un paquet reçu lorsque ce paquet répond aux paramètres définis respectifs. Par ailleurs, le pare-feu gère une pluralité d'interfaces virtuelles avec le réseau sécurisé.

Dans un mode de réalisation de la présente invention, chacune des informations spécifiques correspond à une de ces interfaces virtuelles. Cette correspondance est avantageusement connue dans le pare-feu et également dans le routeur 14.

Ainsi, à l'étape 21, sur réception d'un paquet émis dans le réseau extérieur, on détermine en premier lieu, en fonction de critères de sécurité prédéfinis, si on autorise sa transmission dans le réseau sécurisé.

Le fonctionnement des systèmes pare-feu peut alors être basé sur un principe de filtrage de paquets IP. On analyse des en-têtes des paquets IP échangés.

Lorsqu'un équipement du réseau extérieur se connecte à un équipement du réseau sécurisé, et vice-versa, les paquets de données reçus par le pare-feu contiennent les en-têtes suivants :
- l'adresse IP source de l'équipement émetteur ;
- l'adresse IP destination de l'équipement destinataire ;
- le type de paquet (TCP, UDP, ...) ;
- le numéro de port source et le numéro de port destination référençant respectivement l'application, ou service, source et destination du paquet.

Les adresses IP contenues dans les paquets permettent d'identifier l'équipement émetteur et l'équipement destinataire, tandis que le type de paquet et le numéro de port donnent une indication sur le type de protocole utilisé sur le réseau Internet. Un pare-feu peut ainsi exercer un filtrage par adresse, sur la base des adresses IP.

II peut également exercer un filtrage sur la base du type du protocole utilisé en analysant le type de paquets et les ports correspondant aux paquets IP transitant.

De nombreux protocoles utilisés sur Internet, comme par exemple le protocole FTP, permettent d'initier une connexion sur un port statique, et d'ouvrir dynamiquement un port afin d'établir une session entre d'une part, l'équipement qui initie la session et qui joue alors un rôle de type client, et un autre équipement qui joue alors un rôle de type serveur. Dans un tel cas, il est impossible de réaliser un filtrage en fonction des ports. En effet, les ports sont ouverts dynamiquement et ont donc un caractère aléatoire. Dans ce cas, le pare-feu peut exercer un filtrage dynamique.

La présente invention couvre tous les types de filtrage.

En une étape 22, pour un paquet reçu accepté, on sélectionne une information spécifique parmi les informations spécifiques disponibles sur le pare-feu en fonction de paramètres définis. Cette sélection peut être réalisée sur la base d'informations reçues depuis le réseau extérieur relativement au paquet accepté.

On peut ainsi déterminer que, pour des données relatives à un paquet vérifiant certains paramètres définis, il est avantageux, voire même fondamental, de transmettre au réseau sécurisé une information spécifique avec le paquet lui-même.

Les informations spécifiques peuvent notamment correspondre à des types de service différents dans le réseau sécurisé.

Une fois qu'on a sélectionné l'information spécifique à envoyer avec le paquet dans le réseau sécurisé, à une étape 23, on en déduit une interface virtuelle par laquelle le pare-feu va transmettre le paquet au réseau sécurisé.

En effet, de préférence, à chaque information spécifique correspond une interface virtuelle.

Puis, à une étape 24, le pare-feu transmet le paquet préférablement sans en modifier son contenu, via l'interface virtuelle ainsi déterminée.

De cette manière, sur réception du paquet dans le réseau sécurisé, on détermine l'information spécifique correspondant au paquet reçu, à une étape 25. En effet, le réseau sécurisé, connaissant l'association entre une interface virtuelle et une information spécifique, est en mesure de déduire l'information spécifique en fonction de l'interface virtuelle utilisée pour la transmission du paquet dans la zone démilitarisée.

Ainsi, le pare-feu est alors capable de transmettre une autre information avec le paquet, sans avoir à modifier le paquet et sans ajouter de couche protocolaire supplémentaire.

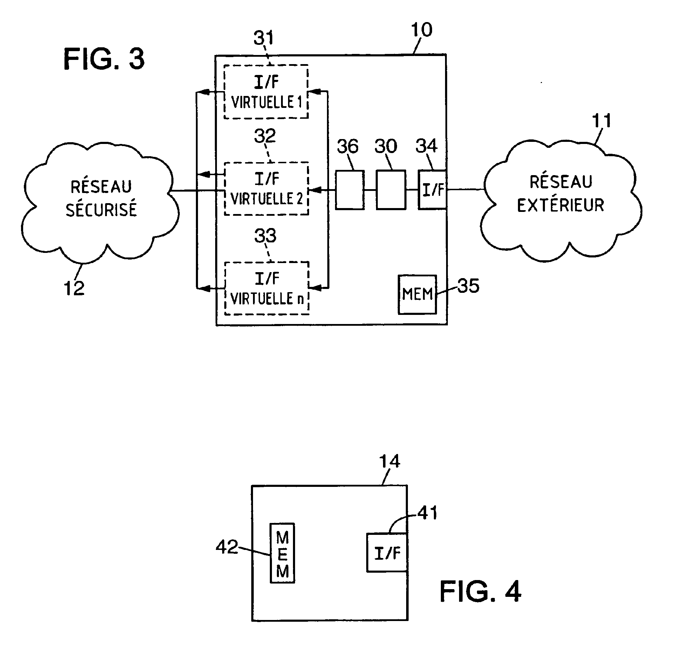

La figure 3 illustre en détail une architecture d'un pare-feu 10 selon un mode de réalisation de la présente invention.

Le pare-feu 10 comprend une première unité d'interface 34 avec le réseau extérieur 11. Cette première unité d'interface comprend des moyens destinés à déterminer si on accepte de transmettre un paquet reçu depuis le réseau extérieur dans le réseau sécurisé sur la base de critères de sécurité prédéfinis.

Le pare-feu comprend également une seconde unité d'interface avec le réseau sécurisé, fournissant une pluralité d'interfaces virtuelles 31, 32, 33, et destinée à transmettre le paquet accepté dans le réseau sécurisé.

De préférence, entre les deux unités d'interface, le pare-feu comprend une unité de sélection 30 destinée à sélectionner une information spécifique à transmettre au réseau sécurisé avec le paquet accepté, en fonction de paramètres définis, ainsi qu'une unité de détermination 36 destinée à déterminer une interface virtuelle parmi ladite pluralité d'interfaces virtuelles, en fonction de l'information spécifique sélectionnée.

Le pare-feu comprend en outre une mémoire 35 destinée à stocker des informations spécifiques, et une association entre ces informations spécifiques et les interfaces virtuelles. Cette association est avantageusement partagée avec le routeur du réseau sécurisé. Par conséquent, le routeur est alors capable en fonction de l'interface via laquelle il reçoit un paquet d'en déduire l'information spécifique qui lui est associée.

La figure 4 illustre un routeur 14 selon un mode de réalisation de la présente invention.

Dans un mode de réalisation de l'invention, le routeur 14 dans le réseau sécurisé comprend une mémoire 42 destinée à stocker une association entre les informations spécifiques et les interfaces virtuelles.

Cette association d'informations peut être fournie au pare-feu et au routeur par configuration, par exemple.

Le routeur comprend également une unité d'interface 41 avec le pare-feu destinée à recevoir des paquets et à déduire une information spécifique à partir de l'interface virtuelle par laquelle le paquet est reçu. Cette déduction est faite sur la base de l'association d'informations mémorisée.

Puis, le routeur est de préférence capable de tenir compte de l'information supplémentaire pour router le paquet reçu en fonction de l'information spécifique.

Ainsi, lorsque le réseau sécurisé est un réseau avionique, situé dans le cockpit d'un avion, différents services peuvent être offerts dans ce réseau, comme notamment des services relatifs au pilotage d'un avion ou encore des services relatifs aux impressions. Dans ce cas, les informations spécifiques peuvent aider le routeur à router de manière plus efficace et plus fiable les paquets en fonction du service auquel ils se rapportent. Ainsi, le pare-feu comprend des moyens pour déterminer, sur la base de données relatives à un paquet à transmettre dans le réseau sécurisé, si ce paquet se rapporte à un service de commande d'avion ou si ce paquet se rapporte à un service d'impression, c'est-à-dire qu'il est destiné à une imprimante par exemple. L'opération consistant à déterminer à quel service un paquet se rapporte peut impliquer de lourds calculs.

Ainsi, dans une telle application, il peut être très avantageux de transmettre cette information depuis le pare-feu 10 au routeur 14.

La figure 5 illustre, dans un mode de réalisation de la présente invention, une transmission depuis le réseau extérieur IP 11 dans le réseau sécurisé 12 en passant par un réseau 50 de type Ethernet entre le pare-feu10 et le routeur 14. Le pare-feu émule une pluralité d'interfaces virtuelles en associant à chacune de ces interfaces virtuelles une adresse physique virtuelle.

De cette manière, le paquet IP est encapsulé par une couche protocolaire qui lui associe une adresse physique virtuelle correspondant à l'interface virtuelle déterminée pour sa transmission.

Ainsi, un paquet 17 est reçu par le pare-feu 10 dans le réseau IP. Ce paquet IP est associé à une adresse physique source 51, selon des principes d'encapsulation bien connus de l'homme du métier. Puis, le pare-feu autorise la transmission de ce paquet dans le réseau sécurisé, il sélectionne alors une information spécifique à transmettre avec le paquet dans le réseau sécurisé. Puis, il détermine une interface virtuelle sur la base de cette information spécifique sélectionnée.

Ensuite, il associe le paquet IP à l'adresse physique virtuelle 52 correspondant à l'interface virtuelle déterminée. Cette adresse physique peut correspondre à une adresse MAC ("Media Access Control") virtuelle.

Puis, sur réception de ce paquet, le routeur analyse l'adresse physique associée au paquet IP reçu et en déduit l'information spécifique correspondante sur la base de l'association des interfaces virtuelles et des informations spécifiques

La présente invention permet avantageusement de protéger un réseau contre des attaques venant de réseaux extérieurs.

La coopération d'un pare-feu et d'un routeur adaptés selon un mode de réalisation de l'invention offre un niveau de sécurité relativement élevé et reste facile à mettre en oeuvre.

Le niveau de sécurité offert par l'invention permet une application aux réseaux avioniques.

En effet, de tels réseaux comprennent des équipements qui requièrent un niveau de sécurité très élevé dès lors qu'ils sont interconnectés avec l'extérieur, comme notamment des équipements relatifs aux commandes d'avion.

Le réseau sécurisé peut être un réseau d'un des protocoles utilisés dans les réseaux avioniques. Un tel protocole peut être un protocole de type AFDX (Avionics Full DupleX) qui permet de transporter des données Ethernet dans un réseau avionique.

Un autre protocole des réseaux avioniques est un protocole normalisé par l'organisme de gestion des télécommunications aéronautiques ARINC ("Aeronautical Randio INC").

Il est également aisé d'appliquer un mode de réalisation de la présente invention à une architecture dans laquelle le pare-feu 10 s'interface, côté réseau sécurisé, d'une part à un réseau avionique d'un premier type, AFDX par exemple, et d'autre part à un réseau ARINC.

## Revendications

1. Procédé de transmission de paquets de données (17) depuis un réseau extérieur (11) vers un réseau sécurisé (12) ;
le réseau sécurisé et le réseau extérieur étant interconnectés via un pare-feu (10) comprenant une première interface avec le réseau extérieur et une seconde interface avec le réseau sécurisé ;
suivant lequel le pare-feu fournit, sur ladite seconde interface, une pluralité d'interfaces virtuelles (31, 32, 33), chacune correspondant à une adresse physique virtuelle; et
suivant lequel une association entre des informations spécifiques du pare-feu et lesdites interfaces virtuelles est mémorisée d'une part dans le pare-feu et d'autre part dans le réseau sécurisé ;
ledit procédé comprenant les étapes suivantes :
/a/ déterminer (21) si on accepte de transmettre un paquet reçu depuis le réseau extérieur dans le réseau sécurisé sur la base de critères de sécurité prédéfinis ;
/b/ dans le cas où le paquet reçu est accepté, sélectionner (22) une information spécifique à transmettre au réseau sécurisé avec le paquet accepté ;
/c/ déterminer (23) une interface virtuelle parmi ladite pluralité d'interfaces virtuelles, en fonction de l'information spécifique sélectionnée sur la base de ladite association ;
/d/ transmettre (24) le paquet accepté via ladite interface virtuelle déterminée ;
/e/ sur réception du paquet dans le réseau sécurisé, déduire (25) ladite information spécifique à partir de l'interface virtuelle par laquelle le paquet est reçu, sur la base de ladite association.

2. Procédé selon la revendication 1, suivant lequel le réseau sécurisé comprend un routeur (14) et une pluralité d'équipements de réseau (15, 16);
suivant lequel la seconde interface du pare-feu est reliée audit routeur ; et suivant lequel le routeur route le paquet accepté en fonction notamment de l'information spécifique déduite à l'étape /e/.

3. Procédé selon la revendication 2, suivant lequel le réseau sécurisé fournit différents types de service, chacun étant associé à un ou plusieurs équipements du réseau sécurisé ; et
suivant lequel chaque information spécifique correspond à un desdits différents types de service.

4. Procédé selon l'une quelconque des revendications précédentes 2 et 3, suivant lequel on associe une adresse physique virtuelle (52) à chaque interface virtuelle (31, 32, 33); et
suivant lequel, à l'étape /d/, on transmet le paquet de données accepté via une couche protocolaire indiquant l'adresse physique virtuelle associée à l'interface virtuelle déterminée à l'étape /c/.

5. Procédé selon l'une quelconque des revendications précédentes, suivant lequel, chaque information spécifique correspondant à des paramètres définis respectifs, à l'étape /b/, on sélectionne une information spécifique correspondant aux paramètres définis respectifs qui sont vérifiés par des données relatives au paquet à transmettre.

6. Procédé selon l'une quelconque des revendications précédentes, suivant lequel le réseau sécurisé est un réseau avionique basé sur un protocole de type ARINC et/ou un protocole de type AFDX.

7. Système de transmission de paquets de données depuis un réseau extérieur (11) vers un réseau sécurisé (12) ;
le réseau sécurisé et le réseau extérieur étant interconnectés via un pare-feu (10) comprenant une première interface avec le réseau extérieur et une seconde interface avec un routeur du réseau sécurisé ;
ledit pare-feu comprenant :
- une première unité d'interface (34) avec le réseau extérieur comprenant des moyens destinés à déterminer si on accepte de transmettre un paquet (17) reçu depuis le réseau extérieur dans le réseau sécurisé sur la base de critères de sécurité prédéfinis ;
- une seconde unité d'interface avec le réseau sécurisé, fournissant une pluralité d'interfaces virtuelles (31, 32, 33), chacune correspondant à une adresse physique virtuelle, et destinée à transmettre le paquet accepté dans le réseau sécurisé ;
- une mémoire (35) destinée à stocker des informations spécifiques, et une association entre lesdites informations spécifiques et lesdites interfaces virtuelles ;
- une unité de sélection (30) destinée à sélectionner, une information spécifique à transmettre au réseau sécurisé avec le paquet accepté ;
- une unité de détermination (36) destinée à déterminer une interface virtuelle parmi ladite pluralité d'interfaces virtuelles, en fonction de l'information spécifique sélectionnée, sur la base de ladite association ;
ledit routeur comprenant :
- une mémoire (42) destinée à stocker ladite association entre les informations spécifiques et les interfaces virtuelles;
- une unité d'interface (41) avec le pare-feu destinée à recevoir des paquets, à déduire une information spécifique à partir de l'interface virtuelle par laquelle le paquet est reçu, sur la base de ladite association, et à router en fonction de ladite information spécifique.

8. Système selon la revendication 7, dans lequel le réseau sécurisé fournit différents types de service, chacun étant associé à un ou plusieurs équipements du réseau sécurisé ; et
dans lequel chaque information spécifique correspond à un desdits différents types de service.

9. Système selon la revendication 7 ou 8, dans lequel on associe une adresse physique virtuelle à chaque interface virtuelle ; et
dans lequel le pare-feu transmet le paquet accepté via une couche protocolaire indiquant l'adresse physique virtuelle associée à l'interface virtuelle déterminée.

10. Système selon l'une quelconque des revendications 7 à 9, dans lequel chaque information spécifique correspondant à des paramètres définis respectifs, le pare-feu sélectionne une information spécifique correspondant aux paramètres définis respectifs qui sont vérifiés par des données relatives au paquet à transmettre.

11. Système selon l'une quelconque des revendications 7 à 10, dans lequel le réseau sécurisé est un réseau avionique basé sur un protocole de type ARINC et/ou un protocole de type AFDX.

12. Pare-feu (10) tel que défini dans l'une quelconque des revendications 7 à 11.

13. Routeur (14) tel que défini dans l'une quelconque des revendications 7 à 11.

14. Produit programme d'ordinateur, pour exécution dans une unité de traitement d'un pare-feu et/ou d'un routeur comprenant des instructions pour la mise en oeuvre du procédé selon l'une quelconque des revendications 1 à 6, lors de l'exécution dans ladite unité de traitement.

## Claims

1. A method of transmitting data packets (17) from an external network (11) to a secure network (12),
the secure network and the external network being interconnected via a firewall (10) comprising a first interface with the external network and a second interface with the secure network,
wherein the firewall provides, over said second interface, a plurality of virtual interfaces (31, 32, 33), each one corresponding to a virtual physical address; and
wherein an association between items of specific information of the firewall and said virtual interfaces is stored in the firewall and in the secure network,
said method comprising the following steps:
a) determining (21) whether to authorize the transmission of a packet received from the external network to the secure network on the basis of predefined security criteria;
b) if the received packet is authorized, selecting (22) an item of specific information to be transmitted to the secure network with the authorized packet;
c) determining (23) a virtual interface from said plurality of virtual interfaces, as a function of the item of specific information selected on the basis of said association;
d) transmitting (24) the authorized packet via the determined virtual interface; and
e) on reception of the packet in the secure network, deducing (25) said item of specific information from the virtual interface through which the packet is received, on the basis of said association.

2. Method according to claim 1, wherein the secure network comprises a router (14) and a plurality of network units (15, 16), wherein the second interface of the firewall is connected to said router, and wherein the router routes the authorized packet as a function notably of the item of specific information deduced in step e).

3. Method according to claim 2, wherein the secure network provides different types of service each associated with one or more units of the secure network and wherein each item of specific information corresponds to one of said different types of service.

4. A method according to any of preceding claims 2 and 3, wherein a virtual physical address (52) is associated with each virtual interface (31, 32, 33) and wherein, in step d), the authorized data packet is transmitted via a protocol layer indicating the virtual physical address associated with the virtual interface determined in step c) .

5. A method according to any one of the preceding claims, wherein each item of specific information corresponding to respective defined parameters, step b) comprises selecting an item of specific information corresponding to the respective defined parameters that are verified by data relating to the packet to be transmitted.

6. A method according to any one of the preceding claims, wherein the secure network is an avionic network based on an ARINC protocol and/or an AFDX protocol.

7. A system for transmitting data packets from an external network (11) to a secure network (12),
the secure network and the external network being interconnected via a firewall (10) comprising a first interface with the external network and a second interface with a router of the secure network,
said firewall further comprising:
· a first interface unit (34) with the external network comprising means for determining whether to authorize the transmission of a packet (17) received from the external network to the secure network on the basis of predefined security criteria;
· a second interface unit with the secure network, providing a plurality of virtual interfaces (31, 32, 33), each corresponding to a virtual physical address, and adapted to transmit an authorized packet to the secure network;
· a memory (35) adapted to store items of specific information and an association between said items of specific information and said virtual interfaces;
· a selection unit (30) adapted to select an item of specific information to be transmitted to the secure network with the authorized packet; and
· a determination unit (36) for determining a virtual interface from said plurality of virtual interfaces as a function of the item of specific information selected on the basis of said association;
and said router comprising:
· a memory (42) for storing said association between the items of specific information and the virtual interfaces;
· an interface unit (41) with the firewall adapted to receive packets, to deduce an item of specific information from the virtual interface through which the packet is received, on the basis of said association, and to perform routing as a function of said item of specific information.

8. A system according to claim 7, wherein the secure network provides different types of service each associated with one or more units of the secure network and wherein each item of specific information corresponds to one of said different types of service.

9. A system according to claim 7 or 8, wherein a virtual physical address is associated with each virtual interface and wherein the firewall transmits the authorized packet via a protocol layer indicating the virtual physical address associated with the determined virtual interface.

10. A system according any of claims 7 to 9, wherein each specific item of information corresponding to respective defined parameters, the firewall selects an item of specific information corresponding to respective defined parameters that are verified by data relating to the packet to be transmitted.

11. A system according to any of claims 7 to 10, wherein the secure network is an avionic network based on an ARINC protocol and/or an AFDX protocol.

12. A firewall (10) as defined in any of claims 7 to 11.

13. A router (14) as defined in any of claims 7 to 11.

14. A computer program product for execution in a processing unit of a firewall and/or a router comprising instructions for executing the method according to any one of claims 1 to 6 when executed in said processing unit.

## Patentansprüche

1. Verfahren zur Übertragung von Datenpaketen (17) von einem externen Netz (11) zu einem gesicherten Netz (12);
wobei das gesicherte Netz und das externe Netz über eine Firewall (10) miteinander verbunden sind, die eine erste Schnittstelle mit dem externen Netz und eine zweite Schnittstelle mit dem gesicherten Netz aufweist,
gemäß dem die Firewall an der zweiten Schnittstelle mehrere virtuelle Schnittstellen (31, 32, 33) liefert, die je einer virtuellen physischen Adresse entsprechen; und
gemäß dem eine Zuordnung zwischen spezifischen Informationen der Firewall und den virtuellen Schnittstellen einerseits in der Firewall und andererseits im gesicherten Netz gespeichert ist; wobei das Verfahren die folgenden Schritten enthält:
/a/ Bestimmen (21), auf der Basis vordefinierter Sicherheitskriterien, ob die Übertragung eines vom externen Netz empfangenen Pakets in das gesicherte Netz akzeptiert wird;
/b/ wenn das empfangene Paket akzeptiert wird, Wählen (22) einer mit dem akzeptierten Paket an das gesicherte Netz zu übertragenden spezifischen Information;
/c/ Bestimmen (23) einer virtuellen Schnittstelle unter den mehreren virtuellen Schnittstellen abhängig von der ausgewählten spezifischen Information auf der Basis der Zuordnung,
/d/ Übertragen (24) des akzeptierten Pakets über die bestimmte virtuelle Schnittstelle,
/e/ bei Empfang des Pakets in dem gesicherten Netz, Ableiten (25) der spezifischen Information ausgehend von der virtuellen Schnittstelle, über die das Paket empfangen wird, auf der Basis der Zuordnung.

2. Verfahren nach Anspruch 1, gemäß dem das gesicherte Netz einen Router (14) und mehrere Netzausrüstungen (15, 16) enthält; gemäß dem die zweite Schnittstelle der Firewall mit dem Router verbunden ist; und gemäß dem der Router das akzeptierte Paket abhängig insbesondere von der im Schritt /e/ abgeleiteten spezifischen Information routet.

3. Verfahren nach Anspruch 2, gemäß dem das gesicherte Netz verschiedene Diensttypen liefert, die je einer oder mehreren Ausrüstungen des gesicherten Netzes zugeordnet sind; und
gemäß dem jede spezifische Information einem der verschiedenen Diensttypen entspricht.

4. Verfahren nach einem der vorhergehenden Ansprüche 2 und 3, gemäß dem jeder virtuellen Schnittstelle (31, 32, 33) eine virtuelle physische Adresse (52) zugeordnet wird; und
gemäß dem im Schritt /d/ das akzeptierte Datenpaket über eine Protokollschicht übertragen wird, die die der im Schritt /c/ bestimmten virtuellen Schnittstelle zugeordnete virtuelle physische Adresse angibt.

5. Verfahren nach einem der vorhergehenden Ansprüche, gemäß dem, wenn jede spezifische Information jeweiligen definierten Parametern entspricht, im Schritt /b/ eine spezifische Information ausgewählt wird, die den jeweiligen definierten Parametern entspricht, die durch Daten bezüglich des zu übertragenden Pakets verifiziert werden.

6. Verfahren nach einem der vorhergehenden Ansprüche, gemäß dem das gesicherte Netz ein avionisches Netz ist, basierend auf einem Protokoll vom Typ ARINC und/oder einem Protokoll vom Typ AFDX.

7. System zur Übertragung von Datenpaketen von einem externen Netz (11) zu einem gesicherten Netz (12); wobei das gesicherte Netz und das externe Netz über eine Firewall (10) miteinander verbunden sind, die eine erste Schnittstelle mit dem externen Netz und eine zweite Schnittstelle mit einem Router des gesicherten Netzes aufweist; wobei die Firewall aufweist:
- eine erste Schnittstelleneinheit (34) mit dem externen Netz, die Einrichtungen aufweist, die dazu bestimmt sind zu bestimmen, ob akzeptiert wird, ein vom externen Netz empfangenes Paket (17) auf der Basis vordefinierter Sicherheitskriterien in das gesicherte Netz zu übertragen;
- eine zweite Schnittstelleneinheit mit dem gesicherten Netz, die mehrere virtuelle Schnittstellen (31, 32, 33) liefert, die je einer virtuellen physischen Adresse entsprechen, und die dazu bestimmt ist, das akzeptierte Paket in das gesicherte Netz zu übertragen;
- einen Speicher (35), der dazu bestimmt ist, spezifische Informationen und eine Zuordnung zwischen den spezifischen Informationen und den virtuellen Schnittstellen zu speichern;
- eine Auswahleinheit (30), die dazu bestimmt ist, eine spezifische Information auszuwählen, die mit dem akzeptierten Paket an das gesicherte Netz zu übertragen ist;
- eine Bestimmungseinheit (36), die dazu bestimmt ist, eine virtuelle Schnittstelle unter den mehreren virtuellen Schnittstellen abhängig von der ausgewählten spezifischen Information auf der Basis der Zuordnung zu bestimmen;
wobei der Router aufweist:
- einen Speicher (42), der dazu bestimmt ist, die Zuordnung zwischen den spezifischen Informationen und den virtuellen Schnittstellen zu speichern;
- eine Schnittstelleneinheit (41) mit der Firewall, die dazu bestimmt ist, Pakete zu empfangen, eine spezifische Information ausgehend von der virtuellen Schnittstelle abzuleiten, über die das Paket empfangen wird, auf der Basis der Zuordnung, und abhängig von der spezifischen Information zu routen.

8. System nach Anspruch 7, bei dem das gesicherte Netz verschiedene Diensttypen liefert, die je einer oder mehreren Ausrüstungen des gesicherten Netzes zugeordnet sind; und
bei dem jede spezifische Information einem der verschiedenen Diensttypen entspricht.

9. System nach Anspruch 7 oder 8, bei dem eine virtuelle physische Adresse jeder virtuellen Schnittstelle zugeordnet wird; und
bei dem die Firewall das akzeptierte Paket über eine Protokollschicht überträgt, die die der bestimmten virtuellen Schnittstelle zugeordnete virtuelle physische Adresse anzeigt.

10. System nach einem der Ansprüche 7 bis 9, bei dem, wenn jede spezifische Information jeweiligen definierten Parametern entspricht, die Firewall eine spezifische Information entsprechend den jeweiligen definierten Parametern auswählt, die durch Daten bezüglich des zu übertragenden Pakets verifiziert werden.

11. System nach einem der Ansprüche 7 bis 10, bei dem das gesicherte Netz ein avionisches Netz basierend auf einem Protokoll vom Typ ARINC und/oder einem Protokoll vom Typ AFDX ist.

12. Firewall (10), wie sie in einem der Ansprüche 7 bis 11 definiert wird.

13. Router (14), wie er in einem der Ansprüche 7 bis 11 definiert wird.

14. Computerprogrammprodukt zur Ausführung in einer Verarbeitungseinheit einer Firewall und/oder eines Routers, das Anweisungen zur Durchführung des Verfahrens nach einem der Ansprüche 1 bis 6 bei der Ausführung in der Verarbeitungseinheit aufweist.
